(19) Europäisches Patentamt
European Patent Office
Office européen des brevets

(11) EP 1 290 267 B1

(12) EUROPEAN PATENT SPECIFICATION

(45) Date of publication and mention of the grant of the patent:
**23.02.2011 Bulletin 2011/08**

(21) Application number: **01941985.2**

(22) Date of filing: **05.06.2001**

(51) Int Cl.:
***D06L 1/04*** *(2006.01)* ***D06L 3/00*** *(2006.01)*
***C11D 7/50*** *(2006.01)* ***C11D 7/54*** *(2006.01)*

(86) International application number:
**PCT/US2001/018267**

(87) International publication number:
**WO 2001/094685 (13.12.2001 Gazette 2001/50)**

(54) **BLEACHING IN CONJUNCTION WITH A LIPOPHILIC FLUID CLEANING REGIME**

VERFAHREN ZUM BLEICHEN UNTER VERWENDUNG VON EINER LIPOPHILEN FLÜSSIGKEIT

BLANCHIMENT ASSOCIE A UNE OPERATION DE NETTOYAGE AU MOYEN D'UN FLUIDE LIPOPHILE

(84) Designated Contracting States:
**AT BE CH CY DE DK ES FI FR GB GR IE IT LI LU MC NL PT SE TR**

(30) Priority:
**05.06.2000 US 209250 P**
**05.06.2000 US 209468 P**
**05.06.2000 US 209443 P**
**05.06.2000 US 209444 P**
**13.11.2000 US 248023 P**
**04.05.2001 US 849893**
**04.05.2001 US 849843**
**04.05.2001 US 849842**
**04.05.2001 US 849839**
**04.05.2001 US 849553**

(43) Date of publication of application:
**12.03.2003 Bulletin 2003/11**

(73) Proprietor: **THE PROCTER & GAMBLE COMPANY**
**Cincinnati, OH 45202 (US)**

(72) Inventors:
- **BURNS, Michael, Eugene**
  **West Chester, OH 45069 (US)**
- **HAUGHT, John, Christopher**
  **West Chester, OH 45069 (US)**

(74) Representative: **Mather, Peter Geoffrey et al**
**NV Procter & Gamble Services Company SA**
**100 Temselaan**
**1853 Strombeek-Bever (BE)**

(56) References cited:
**EP-A- 0 182 583** **EP-A- 0 530 949**
**WO-A-93/18865** **DE-A- 2 157 061**
**US-A- 2 842 422** **US-A- 3 576 747**
**US-A- 3 635 667** **US-A- 6 042 618**

- **DATABASE WPI Section Ch, Week 199704 Derwent Publications Ltd., London, GB; Class A97, AN 1997-038179 XP002180007 -& JP 08 295897 A (KAO CORP), 12 November 1996 (1996-11-12)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Cross Reference to Related Applications

This application claims priority under Title 35, United States Code 119(e) from Provisional Application Serial Numbers 60/209,250; 60/209,468; 601209,443; and 60/209,444 all filed on June 5, 2000; and 60/248,023, filed on November 13, 2000.

### Field of the Invention

The present invention is directed to compositions containing lipophilic fluid and bleaching agents.

### Background of the Invention

Conventional laundering techniques for the cleaning and treatment of fabric articles such as garments have long involved both traditional aqueous based washing and a technique commonly referred to as "dry cleaning". Traditional aqueous based washing techniques have involved immersion of the fabric articles in a solution of water and detergent or soap products followed by rinsing and drying. However, such conventional immersion cleaning techniques have proven unsatisfactory on a wide range fabric articles that require special handling and/or cleaning methods due to fabric content, construction, etceteras, that is unsuitable for immersion in water.

Accordingly, the use of the laundering method of "dry cleaning" has been developed. Dry cleaning typically involves the use of non-aqueous, lipophilic fluids as the solvent or solution for cleaning. While the absence of water permits the cleaning of fabrics without the potential disastrous side effects water may present, these lipophilic fluids do not perform well on hydrophilic and/or combination soils.

Because these lipophilic fluids are typically used in "neat" form (i.e. they contain no additional additives), dry cleaners must often perform pre-treating and/or pre-spotting to remove tough soils from fabrics prior to the dry cleaning cycle. Further, nothing is typically added to boost "whiteness" or "brightness" in fabrics that are dry-cleaned as can be observed from "dingy" or "dull" fabrics returned from a dry cleaner. It would be desirable to add bleaching to the lipophilic fluid treatment regimen in order to increase the lipophilic fluids' brightening, whitening, and/or soil removal capability thereby reducing or eliminating the need for pre-treating and/or pre-spotting

US-A-3,635,667, issued on January 18$^{th}$ 1972, discloses drycleaning of white garments carried out in conventional solvent-detergent baths consisting of petroleum distillate or a halogenated solvent, hydrogen peroxide, water and a volatile alkali.

US-A-3,576,747, issued on April 27th 1971, discloses drycleaning solvents selected from the group consisting of methylene chloride, perchloroethylene, trichloroethylene, carbon tetrachloride or methylchloroform, and a bleaching agent.

JP-A-08 295 897, published on November 12th 1997, discloses liquid bleaching agent compositions comprising hydrogen peroxide, nonionic surfactant, and lipophilic compounds having at least one C6-C22 alkyl, alkenyl or aryl group and at least one hydrophilic group.

DE-A-21 57 061, published on May 24th 1973, discloses a process for bleaching textile materials in organic solvents such as trichloroethylene.

US-A-6,063,135, issued on May 16th 2000, discloses a dry cleaning system and method wherein a specific solvent derived from an organosilicone is used in combination with a detergent.

EP-A-530919, published on March 10th 1993, discloses a cleaning agent and method for removing stains from fabrics comprising a combination of dense gas, a source of hydrogen peroxide and an organic bleach activator therefor.

Accordingly, the need remains for bleach-containing care and treatment regimens for use with lipophilic fluid compositions. These regimens should be capable of delivering enhanced brightening, whitening, and/or soil removal.

### Summary of the Invention

This need is met by the present invention wherein bleach-containing care and treatment compositions for use with lipophilic fluid compositions are disclosed. These compositions are capable of delivering enhanced brightening, whitening, and/or soil removal.

The present invention is directed to a composition for attaining improved fabric cleaning in a lipophilic fluid treatment regimen, wherein the composition includes a lipophilic fluid which is selected from the group consisting of linear and cyclic polysiloxanes, hydrocarbons of the glycol ether, or acetate ester; a bleach system; and a polar component selected from the group consisting of water, lower alcohol, glycols, glycol ethers and combinations thereof, said polar component comprising from at least 0.01% to at most 25% by wt. of the composition.

These and other aspects, features and advantages will become apparent to those of ordinary skill in the art from a reading of the following detailed description and the appended claims. All percentages, ratios and proportions herein are by weight, unless otherwise specified. All temperatures are in degrees Celsius (° C) unless otherwise specified. All measurements are in SI units unless otherwise specified.

## Detailed Description of the Invention

### Defmitions

The term "fabrics" and "fabric" used herein is intended to mean any article that is customarily cleaned in a conventional laundry process or in a dry cleaning process. As such the term encompasses articles of clothing, linen, drapery, and clothing accessories. The term also encompasses other items made in whole or in part of fabric, such as tote bags, furniture covers, tarpaulins and the like.

The term "bleach system" used herein is intended to mean any formulation that contains one or more bleaching agents. Nonlimiting examples of bleaching agents include bleaches, both oxygen and chlorine bleaches, preferably oxygen bleaches, bleach activators, organic peroxides, bleach catalysts, especially metal-containing bleach catalysts, bleach boosting compounds, bleach pre-cursors, as sources of hydrogen peroxide, photobleaches, and bleaching enzymes.

The term "AvO" used herein is intended to mean "available oxygen" as determined by the standard iodometric method (as described for instance in Methoden der Organischen Chemie, Houben Weyl, 1953, Vol. 2, page 562), a suitable method to determine the available oxygen (AvO) content of a composition.

The term "polar component" used herein is intended to mean all materials that are miscible in water. Nonlimiting examples include water, lower alcohols, glycols, glycol ethers, ethers, and combinations of these materials.

The phrase "dry weight of a fabric article" as used herein means the weight of a fabric article that has no intentionally added fluid weight.

The phrase "absorption capacity of a fabric article" as used herein means the maximum quantity of fluid that can be taken in and retained by a fabric article in its pores and interstices. Absorption capacity of a fabric article is measured in accordance with the following Test Protocol for Measuring Absorption Capacity of a Fabric Article.

Step 1: Rinse and dry a reservoir or other container into which a lipophilic fluid will be added. The reservoir is cleaned to free it from all extraneous matter, particularly soaps, detergents and wetting agents.
Step 2: Weigh a "dry" fabric article to be tested to obtain the "dry" fabric article's weight.
Step 3: Pour 2L of a lipophilic fluid at ~20C into the reservoir.
Step 4: Place fabric article from Step 2 into the lipophilic fluid-containing reservoir.
Step 5: Agitate the fabric article within the reservoir to ensure no air pockets are left inside the fabric article and it is thoroughly wetted with the lipophilic fluid.
Step 6: Remove the fabric article from the lipophilic fluid-containing reservoir.
Step 7: Unfold the fabric article, if necessary, so that there is no contact between same or opposite fabric article surfaces.
Step 8: Let the fabric article from Step 7 drip until the drop frequency does not exceed 1 drop/sec.
Step 9: Weigh the "wet" fabric article from Step 8 to obtain the "wet" fabric article's weight.
Step 10: Calculate the amount of lipophilic fluid absorbed for the fabric article using the equation below.

$$FA = (W-D)/D*100$$

where:

FA = fluid absorbed, % (i.e., the absorption capacity of the fabric article in terms of % by dry weight of the fabric article)
W = wet specimen weight, g
D = initial specimen weight, g

By the term "non-immersive" it is meant that essentially all of the fluid is in intimate contact with the fabric articles. There is at most minimal amounts of "free" wash liquor. It is unlike an "immersive" process where the washing fluid is a bath in which the fabric articles are either submerged, as in a conventional vertical axis washing machine, or plunged into, as in a conventional horizontal washing machine. The term "non-immersive" is defined in greater detail

according to the following Test Protocol for Non-Immersive Processes. A process in which a fabric article is contacted by a fluid is a non-immersive process when the following Test Protocol for Non-Immersive Processes satisfied.

Step 1: Determine absorption capacity of a fabric specimen using Test Protocol for Measuring Absorption Capacity of a Fabric Article, described above.
Step 2: Subject a fabric article to a fluid contacting process such that a quantity of the fluid contacts the fabric article.
Step 3: Place a dry fabric specimen from Step 1 in proximity to the fabric article of Step 2 and move/agitate/tumble the fabric article and fabric specimen such that fluid transfer from the fabric article to the fabric specimen takes place (the fabric article and fabric specimen must achieve the same saturation level).
Step 4: Weigh the fabric specimen from Step 3.
Step 5: Calculate the fluid absorbed by the fabric specimen using the following equation:

$$FA = (W-D)/D*100$$

where:

FA = fluid absorbed, %
W = wet specimen weight, g
D = initial specimen weight, g

Step 6: Compare the fluid absorbed by the fabric specimen with the absorption capacity of the fabric specimen. The process is non-immersive if the fluid absorbed by the fabric specimen is less than about 0.8 of the absorption capacity of the fabric specimen.

Furthermore, all adjunct ingredients such as surfactants, bleaches, and the like may be added either prior to fabric application (directly into the lipophilic fluid and/or polar component and/or bleach system) or at some point during fabric application. These optional adjunct ingredients are described in more detail below.

Lipophilic Fluid

The lipophilic fluids herein are selected from the group consisting of linear and cyclic polysiloxanes, hydrocarbons of the glycol ether, acetate ester or lactate ether families The lipohilic fluids herein are selected from the group consisting of linear and cyclic polysiloxanes, hydrocarbons of the glycol ether acetate ester or lactate ether families. The lipophilic fluid herein is one having a liquid phase present under operating conditions. In general such a fluid can be fully liquid at ambient temperature and pressure, can be an easily melted solid, e.g., one which becomes liquid at temperatures in the range from about 0 deg. C to about 60 deg. C, or can comprise a mixture of liquid and vapor phases at ambient temperatures and pressures, e.g., at 25 deg. C and 1 atm.

Depending on the nature of treatment the lipophilic fluid may be removed mechanically, evaporatively, or any combination thereof. For example, if the purpose of the treatment is to provide cleaning it will be desirable to mechanically remove from the fabric articles at least 50% of the textile treatment liquid, for example by spinning. On the other hand, if the purpose of the treatment is to deposit a conditioning agent into the other hand, if the purpose of the treatment is to deposit a conditioning agent into the fabric, the liquid is preferably removed evaporatively.

*Qualification of Lipophilic Fluid -- Lipophilic Fluid Test (LF Test)*

Any non-aqueous fluid that is both capable of meeting known requirements for a dry-cleaning fluid (e.g, flash point etc.) and is capable of at least partially dissolving sebum, as indicated by the test method described below, is suitable as a lipophilic fluid herein. The ability of a particular material to remove sebum can be measured by any known technique. As a general guideline, perfluorobutylamine (Fluorinert FC-43®) on its own (with or without adjuncts) is a reference material that, by definition, is unsuitable as the lipophilic fluid herein (it is essentially a non-solvent) while D5 dissolves sebum.

The following is the method for investigating and qualifying other materials, e.g., other low-viscosity, free-flowing silicones, for use as the lipophilic fluid. The method uses commercially available Crisco® canola oil, oleic acid (95% pure, available from Sigma Aldrich Co.) and squalene (99% pure, available from J.T. Baker) as model soils for sebum. The test materials should be substantially anhydrous and free from any added adjuncts, or other materials during evaluation.

Prepare three vials. Place 1.0 g of canola oil in the first; in a second vial place 1.0 g of the oleic acid (95%), and in a third and final vial place 1,0g of the squalene (99.9%). To each vial add 1 g of the fluid to be tested for lipophilicity.

Separately mix at room temperature and pressure each vial containing the lipophilic soil and the fluid to be tested for 20 seconds on a standard vortex mixer at maximum setting. Place vials on the bench and allow settling for 15 minutes at room temperature and pressure. If, upon standing, a single phase is formed in any of the vials containing lipophilic soils, then the fluid qualifies as suitable for use as a "lipophilic fluid" in accordance with the invention. However, if two or more separate layers are formed in all three vials, then the amount of fluid dissolved in the oil phase will need to be further determined before rejecting or accepting the fluid as qualified.

In such a case, with a syringe, carefully extract a 200 microliter sample from each layer in each vial. The syringe-extracted layer samples are placed in GC autosampler vials and subjected to conventional GC analysis after determining the retention time of calibration samples of each of the three models soils and the fluid being tested. If more than 1% of the test fluid by GC, preferably greater, is found to be present in any one of the layers which consists of the oleic acid, canola oil or squalene layer, then the test fluid is also qualified for use as a lipophilic fluid If needed, the method can be further calibrated using heptacosafluorotributylamine, i.e., Fluorinert PC-43 (fail) and cyclopentasiloxane (pass).

A suitable GC is a Hewlett Packard Gas Chromatograph HP5890 Series II equipped with a split/splitless injector and FID. A suitable column used in determining the amount of lipophilic fluid present is a J&W Scientific capillary column DB-1HT, 30 meter, 025mm id, 0.1 μm film thickness cat# 1221131. The GC is suitably operated under the following conditions:

Carrier Gas: Hydrogen
Column Head Pressure: 62 kPa (9 psi)
Flows:

- Column Flow @ ~1.5 ml/min.
- Split Vent @ ~250-500 ml/min.
- Septum Purge @ 1 ml/min.

Injection: HP 7673 Autosampler, 10 μl syringe, 1 μl injection
Injector Temperature: 350 °C
Detector Temperature: 380°C
Oven Temperature Program:

- initial 60 °C, hold 1 min.
- rate 25 °C/min.
- final 380 °C hold 30 min.

Preferred lipophilic fluids suitable for use herein can further be qualified for use on the basis of having an excellent garment care profile. Garment care profile testing is well known in the art and involves testing a fluid to be qualified using a wide range of garment or fabric article components, including fabrics, threads and elastics used in seams, etc., and a range of buttons. Preferred lipophilic fluids for use herein have an excellent garment care profile, for example they have a good shrinkage or fabric puckering profile and do not appreciably damage plastic buttons.

For purposes of garment care testing or other qualification, e.g., flammability, a lipophilic fluid for use in the lipophilic fluid can be present in a mixtures, e.g., with water, at approximately the ratio to be used in the final lipophilic fluid which will come into contact with fabric articles. Certain materials, which remove sebum, qualify for use as lipophilic fluids; for example, ethyl lactates can be quite objectionable in their tendency to dissolve buttons, and if such a material is to be used in the lipophilic fluid, it will be formulated with water and/or other solvents such that the overall mix is not substantially damaging to buttons. Other lipophilic fluids, D5 for example, meets the garment care requirements commendably. Some suitable lipophilic fluids may be found in granted U.S. Patent Nos. 5,865,852; 5,942,007; 6,042,617; 6,042,618; 6,056,789; 6,059,845; and 6,063,135.

Lipophilic solvents are selected from the group consisting of the linear and cyclic polysiloxanes and hydrocarbons of the glycol ether or acetate ester families. Preferred lipophilic solvents include cyclic siloxanes having a boiling point at 101 kN/$m^2$ (760 mm Hg.) of below about 250°C. Specifically preferred cyclic siloxanes for use in this invention are octamethylcyclotetrasiloxane, decamethylcyclopentasiloxane, and dodecamethylcyclohexasiloxane. Preferably, the cyclic siloxane comprises decamethylclopentasiloxane (D5, pentamer) and is substantially free of octamethylcycloetrasiloxane (tetramer) and dodecamethylcyclohexasiloxane (hexamer).

However, it should be understood that useful cyclic siloxane mixtures might contain, in addition to the preferred cyclic siloxanes, minor amounts of other cyclic siloxanes including octamethylcyclotetrasiloxane and hexamethylcyclotrisiloxane or higher cyclics such as tetradecamethylcycloheptasiloxane. Generally the amount of these other cyclic

siloxanes in useful cyclic siloxane mixtures will be less than about 10 percent based on the total weight of the mixture. The industry standard for cyclic siloxane mixtures is that such mixtures comprise less, than about 1% by weight of the mixture of octamethylcyclotetrasiloxane.

Accordingly, the lipophilic fluid or the present invention preferably comprises more than about 50%, more preferably more than about 75%, even more preferably at least about 90%, most preferably at least about 95% by weight of the lipophilic fluid of decamethylcyclopentasiloxane. Alternatively, the lipophilic fluid may comprise siloxanes which are a mixture of cyclic siloxanes having more than about 50%, preferably more than about 75%, more preferably at least about 90%, most preferably at least about 95% up to about 100% by weight of the mixture of decamethylcyclopentasiloxane and less than about 10%, preferably less than about 5%, more preferably less than about 2%, even more preferably less than about 1%, most preferably less than about 0.5% to about 0% by weight of the mixture of octamethylcyclotetrasiloxane and/or dodecamethylcyclohexasiloxane.

Bleaching System

The compositions of the present invention comprise a bleaching system. Bleaching systems comprise a "bleaching agent" (source of hydrogen peroxide) and an "activator" or "catalyst". The bleaching agents will typically be at levels of from about 1%, preferably from about 5%, to about 30%, preferably to about 20% by weight of the composition. If present the amount of bleach activator will typically be from about 0.1%, preferably from about 0.5%, to about 60%, preferably to about 40%, by weight, of the bleaching composition comprising the bleaching agent and bleach activator.

Bleaching Agents - Hydrogen peroxide sources are described in detail in the herein incorporated Kirk Othmer's Encyclopedia of Chemical Technology, 4th Ed (1992, John Wiley & Sons), Vol. 4, pp. 271-300 "Bleaching Agents (Survey) ", and include the various forms of sodium perborate and sodium percarbonate, including various coated and modified forms.

The preferred source of hydrogen peroxide used herein can be any convenient source, including hydrogen peroxide itself. For example, perborate, e.g., sodium perborate (any hydrate but preferably the mono- or tetra-hydrate), sodium carbonate peroxyhydrate or equivalent percarbonate salts, sodium pyrophosphate peroxyhydrate, urea peroxyhydrate, or sodium peroxide can be used herein. Also useful are sources of available oxygen such as persulfate bleach (e.g., OXONE, manufactured by DuPont). Sodium perborate monohydrate and sodium percarbonate are particularly preferred. Mixtures of any convenient hydrogen peroxide sources can also be used.

A preferred percarbonate bleach comprises dry particles having an average particle size in the range from about 500 micrometers to about 1,000 micrometers, not more than about 10% by weight of said particles being smaller than about 200 micrometers and not more than about 10% by weight of said particles being larger than about 1,250 micrometers. Optionally, the percarbonate can be coated with a silicate, borate or water-soluble surfactants. Percarbonate is available from various commercial sources such as FMC, Solvay and Tokai Denka.

Compositions of the present invention may also comprise as the bleaching agent a chlorine-type bleaching material. Such agents are well known in the art, and include for example sodium dichloroisocyanurate ("NaDCC"). However, chlorine-type bleaches are less preferred for compositions which comprise enzymes.

(a) Bleach Activators - Preferably, the peroxygen bleach component in the composition is formulated with an activator (peracid precursor). The activator is present at levels of from about 0.01%, preferably from about 0.5%, more preferably from about 1% to about 15%, preferably to about 10%, more preferably to about 8%, by weight of the composition. Preferred activators are selected from the group consisting of tetraacetyl ethylene diamine (TAED), benzoylcaprolactam (BzCL), 4-nitrobenzoylcaprolactam, 3-chlorobenzoylcaprolactam, benzoyloxybenzenesulphonate (BOBS), nonanoyloxybenzenesulphonate (NOBS), phenyl benzoate (PhBz), decanoyloxybenzenesulphonate ($C_{10}$-OBS), benzoylvalerolactam (BZVL), octanoyloxybenzenesulphonate ($C_8$-OBS), perhydrolyzable esters and mixtures thereof, most preferably benzoylcaprolactam and benzoylvalerolactam. Particularly preferred bleach activators in the pH range from about 8 to about 9.5 are those selected having an OBS or VL leaving group.

Preferred hydrophobic bleach activators include, but are not limited to, nonanoyloxybenzenesulphonate (NOBS), 4-[N-(nonaoyl) amino hexanoyloxy]-benzene sulfonate sodium salt (NACA-OBS) an example of which is described in U.S. Patent No. 5,523,434, dodecanoyloxybenzenesulphonate (LOBS or $C_{12}$-OBS), 10-undecenoyloxybenzenesulfonate (UDOBS or $C_{11}$-OBS with unsaturation in the 10 position), and decanoyloxybenzoic acid (DOBA).

Preferred bleach activators are those described in U.S. 5,698,504 Christie et al., issued December 16, 1997; U.S. 5,695,679 Christie et al. issued December 9, 1997; U.S. 5,686,401 Willey et al., issued November 11, 1997; U.S. 5,686,014 Hartshorn et al., issued November 11, 1997; U.S. 5,405,412 Willey et al., issued April 11, 1995; U.S. 5,405,413 Willey et al., issued April 11, 1995; U.S. 5,130,045 Mitchel et al., issued July 14, 1992; and U.S. 4,412,934 Chung et al., issued November 1, 1983, and copending patent applications U. S. Serial Nos. 08/709,072, 08/064,564.

The mole ratio of peroxygen bleaching compound (as AvO) to bleach activator in the present invention generally ranges from at least 1:1, preferably from about 20:1, more preferably from about 10:1 1 to about 1:1, preferably to about 3:1.

Quaternary substituted bleach activators may also be included. The present laundry compositions preferably

comprise a quaternary substituted bleach activator (QSBA) or a quaternary substituted peracid (QSP); more preferably, the former. Preferred QSBA structures are further described in U.S. 5,686,015 Willey et al., issued November 11, 1997; U.S. 5,654,421 Taylor et al., issued August 5, 1997; U.S. 5,460,747 Gosselink et al., issued October 24, 1995; U.S. 5,584,888 Miracle et al., issued December 17, 1996; and U.S. 5,578,136 Taylor et al., issued November 26, 1996.

Highly preferred bleach activators useful herein are amide-substituted as described in U.S. 5,698,504, U.S. 5,695,679, and U.S. 5,686,014 each of which are cited herein above. Preferred examples of such bleach activators include: (6-octanamidocaproyl)oxybenzenesulfonate,(6-nonanamidocaproyl) oxybenzenesulfonate, (6-decanamidocaproyl)oxybenzenesulfonate and mixtures thereof.

Other useful activators, disclosed in U.S. 5,698,504, U.S. 5,695,679, U.S. 5,686,014 each of which is cited herein above and U.S. 4,966,723Hodge et al., issued October 30, 1990, include benzoxazin-type activators, such as a $C_6H_4$ ring to which is fused in the 1,2-positions a moiety --C(O)OC($R^1$)=N-.

Depending on the activator and precise application, good bleaching results can be obtained from bleaching systems having with in-use pH of from about 6 to about 13, preferably from about 9.0 to about 10.5. Typically, for example, activators with electron-withdrawing moieties are used for near-neutral or sub-neutral pH ranges. Alkalis and buffering agents can be used to secure such pH. In addition, pH control may decrease or eliminate the need for a separate oxygen source in order to achieve good bleach efficacy.

Acyl lactam activators, as described in U.S. 5,698,504, U.S. 5,695,679 and U.S. 5,686,014, each of which is cited herein above, are very useful herein, especially the acyl caprolactams (see for example WO 94-28102 A) and acyl valerolactams (see U.S. 5,503,639 Willey et al., issued April 2, 1996).

<u>(b) Organic Peroxides, especially Diacyl Peroxides -</u> These are extensively illustrated in Kirk Othmer, Encyclopedia of Chemical Technology, Vol. 17, John Wiley and Sons, 1982 at pages 27-90 and especially at pages 63-72. If a diacyl peroxide is used, it will preferably be one which exerts minimal adverse impact on spotting/filming.

<u>(c) Metal-containing Bleach Catalysts</u> - The present invention compositions and methods may utilize metal-containing bleach catalysts that are effective for use in bleaching compositions. Preferred are manganese and cobalt-containing bleach catalysts. Further, transition metals cations of defined bleach catalytic activity as described below may decrease or eliminate the need for a separate oxygen source. Alternatively, a separate oxygen source may be provided in conjunction with these cation catalysts in order to boost bleach performance or reduce required bleach concentrations.

One type of metal-containing bleach catalyst is a catalyst system comprising a transition metal cation of defined bleach catalytic activity, such as copper, iron, titanium, ruthenium tungsten, molybdenum, or manganese cations, an auxiliary metal cation having little or no bleach catalytic activity, such as zinc or aluminum cations, and a sequestrate having defined stability constants for the catalytic and auxiliary metal cations, particularly ethylenediaminetetraacetic acid, ethylenediaminetetra (methylenephosphonic acid) and water-soluble salts thereof. Such catalysts are disclosed in U.S. 4,430,243 Bragg, issued February 2, 1982.

<u>Manganese Metal Complexes</u> - If desired, the compositions herein can be catalyzed by means of a manganese compound. Such compounds and levels of use are well known in the art and include, for example, the manganese-based catalysts disclosed in U.S. Patent Nos. 5,576,282; 5,246,621; 5,244,594; 5,194,416; and 5,114,606; and European Pat. App. Pub. Nos. 549,271 A1, 549,272 A1, 544,440 A2, and 544,490 A1; Preferred examples of these catalysts include $Mn^{IV}_2(u\text{-}O)_3$(1,4,7-trimethyl-1,4,7-triazacyclononane)$_2$ (PF6)2, $Mn^{III}_2(u\text{-}O)_1(u\text{-}OAc)_2$(1,4,7-trimethyl-1,4,7-triazacyclononane)$_2(ClO_4)_2$, $Mn^{IV}_4(u\text{-}O)_6$(1,4,7-triazacyclononane)$_4(ClO_4)_4$, $Mn^{III}$-$Mn^{IV}_4(u\text{-}O)_1(u\text{-}OAc)_2$-(1,4,7-trimethyl-1,4,7-triazacyclononane)$_2(ClO_4)_3$, $Mn^{IV}$(1,4,7-trimethyl-1,4,7-triazacyclononane)- $(OCH_3)_3(PF_6)$, and mixtures thereof. Other metal-based bleach catalysts include those disclosed in U.S. Patent Nos. 4,430,243 and U.S. 5,114,611. The use of manganese with various complex ligands to enhance bleaching is also reported in the following: U.S. Patent Nos. 4,728,455; 5,284,944; 5,246,612; 5,256,779; 5,280,117; 5,274,147; 5,153,161; and 5,227,084.

<u>Cobalt Metal Complexes -</u> Cobalt bleach catalysts useful herein are known, and are described, for example, in U.S. Patent Nos. 5,597,936; 5,595,967; and 5,703,030; and M. L. Tobe, "Base Hydrolysis of Transition-Metal Complexes", Adv. Inorg. Bioinorg. Mech., (1983), 2, pages 1-94. The most preferred cobalt catalyst useful herein are cobalt pentaamine acetate salts having the formula $[Co(NH_3)_5OAc]Ty$, wherein "OAc" represents an acetate moiety and "$T_y$" is an anion, and especially cobalt pentaamine acetate chloride, $[Co(NH_3)_5OAc]Cl_2$; as well as $[Co(NH_3)_5OAc](OAc)_2$; $[Co(NH_3)_5OAc](PF_6)_2$; $[Co(NH_3)_5OAc](SO_4)$; $[Co(NH_3)_5OAc](BF_4)_2$; and $[Co(NH_3)_5OAc](NO_3)_2$ (herein "PAC").

These cobalt catalysts are readily prepared by known procedures, such as taught for example in U.S. Patent Nos. 5,597,936; 5,595,967; and 5,703,030; in the Tobe article and the references cited therein; and in U.S. Patent 4,810,410; J. Chem. Ed. (1989), 66 (12), 1043-45; The Synthesis and Characterization of Inorganic Compounds, W.L. Jolly (Prentice-Hall; 1970), pp. 461-3; Inorg. Chem., 18, 1497-1502 (1979); Inorg. Chem., 21, 2881-2885 (1982); Inorg. Chem., 18, 2023-2025 (1979); Inorg. Synthesis, 173-176 (1960); and Journal of Physical Chemistry, 56, 22-25 (1952).

<u>Transition Metal Complexes of Macropolycyclic Rigid Ligands</u> - Compositions herein may also suitably include as bleach catalyst a transition metal complex of a macropolycyclic rigid ligand. The amount used is a catalytically effective amount, suitably about 1 ppb or more, for example up to about 99.9%, more typically about 0.001 ppm or more, preferably

from about 0.05 ppm to about 500 ppm (wherein "ppb" denotes parts per billion by weight and "ppm" denotes parts per million by weight).

Transition-metal bleach catalysts of Macrocyclic Rigid Ligands which are suitable for use in the invention compositions can in general include known compounds where they conform with the definition herein, as well as, more preferably, any of a large number of novel compounds expressly designed for the present laundry or laundry uses, and non-limitingly illustrated by any of the following:

Dichloro-5,12-dimethyl-1,5,8,12-tetraazabicyclo[6.6.2]hexadecane Manganese(II)
Dichloro-5,12-diethyl-1,5,8,12-tetraazabicyclo[6.6.2]hexadecane Manganese(II)
Diaquo-5,12-dimethyl-1,5,8,12-tetraazabicyclo[6.6.2]hexadecaneManganese(II) Hexafluorophosphate
Diaquo-5,12-diethyl-1,5,8,12-tetraazabicyclo[6.6.2]hexadecaneManganese(II) Hexafluorophosphate
Aquo-hydroxy-5,12-dimethyl-1,5,8,12-tetraazabicyclo[6.6.2]hexadecane Manganese(III) Hexafluorophosphate
Diaquo-5,12-dimethyl-1,5,8,12-tetraazabicyclo[6.6.2]hexadecaneManganese(II) Tetrafluoroborate
Dichloro-5,12-dimethyl-1,5,8,12 tetraazabicyclo[6.6.2]hexadecane Manganese(III) Hexafluorophosphate
Dichloro-5,12-diethyl-1,5,8,12-tetraazabicyclo[6.6.2]hexadecaneManganese(III) Hexafluorophosphate
Dichloro-5,12-di-n-butyl-1,5,8,12-tetraaza bicyclo[6.6.2]hexadecane Manganese(II)
Dichloro-5,12-dibenzyl-1,5,8,12-tetraazabicyclo[6.6.2]hexadecaneManganese(II)
Dichloro-5-n-butyl-12-methyl-1,5,8,12-tetraaza-bicyclo[6.6.2]hexadecane Manganese(II)
Dichloro-5-n-octyl-12-methyl-1,5,8,12-tetraaza-bicyclo[6.6.2]hexadecane Manganese(II)
Dichloro-5-n-butyl-12-methyl-1,5,8,12-tetraaza-bicyclo[6.6.2]hexadecane Manganese(II).

As a practical matter, and not by way of limitation, the compositions and laundry processes herein can be adjusted to provide on the order of at least one part per hundred million of the active bleach catalyst species in the aqueous washing medium, and will preferably provide from about 0.01 ppm to about 25 ppm, more preferably from about 0.05 ppm to about 10 ppm, and most preferably from about 0.1 ppm to about 5 ppm, of the bleach catalyst species in the wash liquor. In order to obtain such levels in the wash liquor of an automatic washing process, typical compositions herein will comprise from about 0.0005% to about 0.2%, more preferably from about 0.004% to about 0.08%, of bleach catalyst, especially manganese or cobalt catalysts, by weight of the bleaching compositions.

(d) Other Bleach Catalysts - The compositions herein may comprise one or more other bleach catalysts. Preferred bleach catalysts are zwitterionic bleach catalysts, which are described in U.S. Patent No. 5,576,282 (especially 3-(3,4-dihydroisoquinolinium) propane sulfonate. Other bleach catalysts include cationic bleach catalysts are described in U.S. Patent Nos. 5,360,569, 5,442,066, 5,478,357, 5,370,826, 5,482,515, 5,550,256, and WO 95/13351, WO 95/13352, and WO 95/13353.

(e) Bleach Boosting Compounds - The compositions herein may comprise one or more bleach boosting compounds. Bleach boosting compounds provide increased bleaching effectiveness in lower temperature applications. The bleach boosters act in conjunction with conventional peroxygen bleaching sources to provide increased bleaching effectiveness.

Suitable bleach boosting compounds for use in accordance with the present invention comprise cationic imines, zwitterionic imines, anionic imines and/or polyionic imines having a net charge of from about +3 to about -3, and mixtures thereof. These imine bleach boosting compounds of the present invention include those of the general structure:

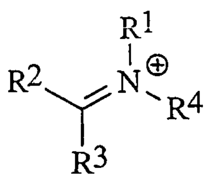

[I]

where $R^1$ - $R^4$ may be a hydrogen or an unsubstituted or substituted radical selected from the group consisting of phenyl, aryl, heterocyclic ring, alkyl and cycloalkyl radicals.

Preferred bleach boosting compounds include where $R^1$ - $R^4$ may be a hydrogen or an unsubstituted or substituted radical selected from the group consisting of phenyl, aryl, heterocyclic ring, alkyl and cycloalkyl radicals except that at least one of $R^1$- $R^4$ contains an anionically charged moiety.

More preferred bleach boosting compounds include the anionically charged moiety bonded to the imine nitrogen. Such bleach boosting compounds comprise quaternary imine zwitterions represented by the formula:

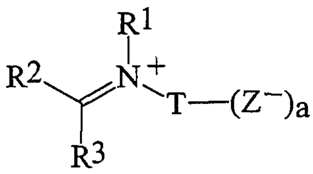

[II]

wherein $R^1$ - $R^3$ is hydrogen or an unsubstituted or substituted radical selected from the group consisting of phenyl, aryl, heterocyclic ring, alkyl and cycloalkyl radicals; $R_1$ and $R_2$ form part of a common ring; T has the formula:

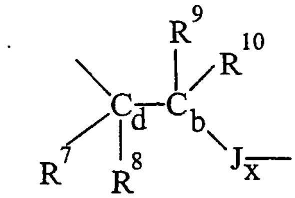

wherein x is equal to 0 or 1; J, when present, is selected from the group consisting of $-CR^{11}R^{12}-$ $-CR^{11}R^{12}CR^{13}R^{14}-$, and $-CR^{11}R^{12}CR^{13}R^{14}CR^{15}R^{16}-$; $R^7$-$R^{16}$ are individually selected from the group consisting of H, linear or branched $C_1$-$C_{18}$ substituted or unsubstituted alkyl, alkylene, oxyalkylene, aryl, substituted aryl, substituted arylcarbonyl groups and amide groups; Z is covalently bonded to $J_x$ when x is 1 and to $C_b$ when x is 0, and Z is selected from the group consisting of $-CO_2-$, $-SO_3-$and - OSO-and a is 1. $R_1$ and $R_2$ together may form the non-charged moiety:

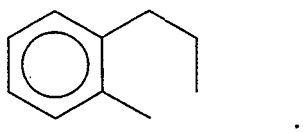

Most preferred bleach boosting compounds include are aryliminium zwitterions wherein $R_3$ is H, Z is $-SO_3-$ or $-OSO_3-$, and a is 1. The aryliminium zwitterions may have the formula:

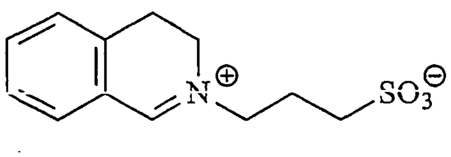

or

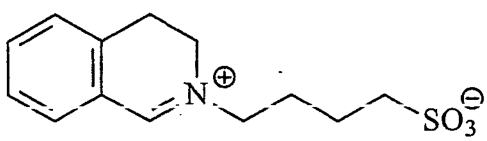

or

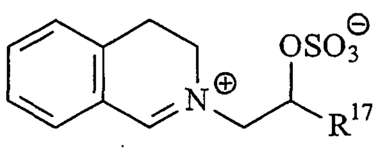

where $R^{17}$ is selected from the group consisting of H and linear or branched $C_1$-$C_{18}$ substituted or unsubstituted alkyl, preferably $C_1$-$C_{14}$ alkyl and even more preferably $C_8$-$C_{10}$ linear alkyl chain.

The bleach boosting compounds may also comprise an aryliminum polyion having a net negative charge and $R^3$ is H, T is $-(CH_2)_b-$ or $-CH_2(C_6H_4)-$, Z is $-SO_3^-$, a is 2 and b is from 2 to 4. The aryliminium polyion preferably has the formula:

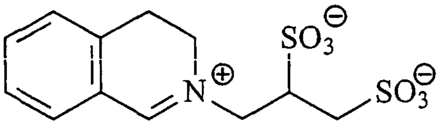

or

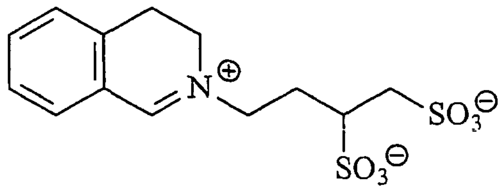

or is a water-soluble salt of these compounds.

The quaternary imine bleach boosting compounds preferably act in conjunction with a peroxygen source to provide a more effective bleaching system. The bleach boosting compounds react with the peroxygen source to form a more active bleaching species, an oxaziridinium compound. The formed oxaziridinium compounds are either cationic, zwitterionic or polyionic with a net negative charge as was the imine bleach boosting compound. The oxaziridinium compound has an increased activity at lower temperatures relative to the peroxygen compound. The oxaziridinium compound is represented by the formula:

(III)

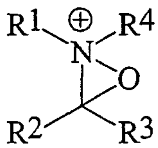

and can be produced from the imine of formula (I) or (II), wherein $R^4$ is $T-(Z)_a$ , of the present invention with the reaction:

(I) (III)

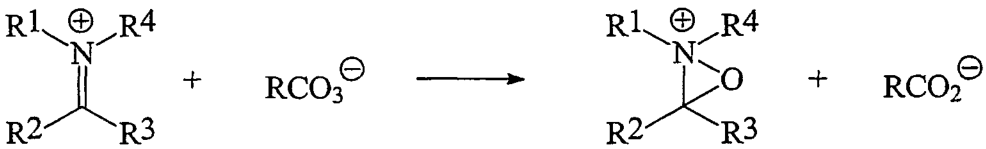

.

Thus, the preferred bleach boosting compounds of the present invention represented by the formula (II) produces the active oxaziridinium bleaching species represented by the formula:

(IV)

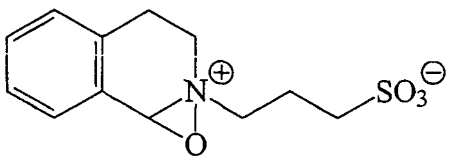

or

(V)

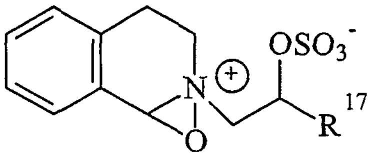

wherein $R^{17}$ is defined as above.

Peroxygen sources are well-known in the art and the peroxygen source employed in the present invention may comprise any of these well known sources, including peroxygen compounds as well as compounds which under consumer use conditions provide an effective amount of peroxygen in situ. The peroxygen source may include a hydrogen peroxide source, the in situ formation of a peracid anion through the reaction of a hydrogen peroxide source and a bleach activator, preformed peracid compounds or mixtures of suitable peroxygen sources. Of course, one of ordinary skill in the art will recognize that other sources of peroxygen may be employed without departing from the scope of the invention.

The bleach boosting compounds, when present, are preferably employed in conjunction with a peroxygen source in the bleaching compositions of the present invention. In such a composition, the peroxygen source is preferably present at a level of from about 0.1% to about 60% by weight of the composition, and more preferably from about 1% to about 40% by weight of the composition. In the composition, the bleach boosting compound is preferably present at a level of from about 0.01 % to about 10% by weight of the composition, and more preferably from about 0.05% to about 5% by weight of the composition.

(f) Preformed Peracids - Also suitable as bleaching agents are preformed peracids, such as phthalimido-peroxycaproic acid ("PAP"). See for example U.S. Patent Nos. 5,487,818, 5,310,934, 5,246,620, 5,279,757 and 5,132,431.

(g) Photobleaches - Suitable photobleaches for use in the treating compositions of the present invention include, but are not limited to, the photobleaches described in U.S. Patent Nos. 4,217,105 and 5,916,481.

(h) Enzyme Bleaching - Enzymatic systems may be used as bleaching agents. The hydrogen peroxide may also be present by adding an enzymatic system (i.e. an enzyme and a substrate therefore) which is capable of generating hydrogen peroxide at the beginning or during the washing and/or rinsing process. Such enzymatic systems are disclosed in EP Patent Application 91202655.6 filed October 9, 1991.

The present invention compositions and methods may utilize alternative bleach systems such as ozone. Bleaching with ozone may be accomplished by introducing ozone-containing gas having ozone content from about 20 to about 300 g/$m^3$ into the solution that is to contact the fabrics. The gas:liquid ratio in the solution should be maintained from about 1:2.5 to about 1:6. U.S. Patent 5,346, 588 describes a process for the utilization of ozone as an alternative to conventional bleach systems.

Adjunct Ingredients

Adjunct materials can vary widely and can be used at widely ranging levels. For example, detersive enzymes such as proteases, amylases, cellulases, lipases and the like as well as bleach catalysts including the macrocyclic types having manganese or similar transition metals all useful in laundry and cleaning products can be used herein at very

low, or less commonly, higher levels. Adjunct materials that are catalytic, for example enzymes, can be used in "forward" or "reverse" modes, a discovery independently useful from the specific appliances of the present invention. For example, a lipolase or other hydrolase may be used, optionally in the presence of alcohols as adjuncts, to convert fatty acids to esters, thereby increasing their solubility in the lipohilic fluid. This is a "reverse" operation, in contrast with the normal use of this hydrolase in water to convert a less water-soluble fatty ester to a more water-soluble material. In any event, any adjunct ingredient must be suitable for use in combination with the lipophilic fluid.

The compositions may comprise emulsifiers. Emulsifiers are well known in the chemical art. Essentially, an emulsifier acts to bring two or more insoluble or demi-soluble phases together to create a stable or semi-stable emulsion. It is preferred in the claimed invention that the emulsifier serves a dual purpose wherein it is capable of acting not only as an emulsifier but also as a treatment performance booster. For example, the emulsifier may also act as a surfactant thereby boosting cleaning performance. Both ordinary emulsifiers and emulsifier/surfactants are commercially available.

Some suitable cleaning additives include, but are not limited to, builders, surfactants, enzymes, bleach activators, bleach catalysts, bleach boosters, bleaches, alkalinity sources, antibacterial agents, colorants, perfumes, pro-perfumes, finishing aids, lime soap dispersants, composition malodor control agents, odor neutralizers, polymeric dye transfer inhibiting agents, crystal growth inhibitors, photobleaches, heavy metal ion sequestrants, anti-tarnishing agents, anti-microbial agents, anti-oxidants, anti-redeposition agents, soil release polymers, electrolytes, pH modifiers, thickeners, abrasives, divalent or trivalent ions, metal ion salts, enzyme stabilizers, corrosion inhibitors, diamines or polyamines and/or their alkoxylates, suds stabilizing polymers, solvents, process aids, fabric softening agents, optical brighteners, hydrotropes, suds or foam suppressors, suds or foam boosters, fabric softeners, antistatic agents, dye fixatives, dye abrasion inhibitors, anti-crocking agents, wrinkle reduction agents, wrinkle resistance agents, soil release polymers, soil repellency agents, sunscreen agents, anti-fade agents, and mixtures thereof.

The term "surfactant" conventionally refers to materials that are surface-active either in the water, the lipophilic fluid, or the mixture of the two. Some illustrative surfactants include nonionic, cationic and silicone surfactants as used in conventional aqueous detergent systems. Suitable nonionic surfactants include, but are not limited to:

a) Polyethylene oxide condensates of nonyl phenol and myristyl alcohol, such as in US 4685930 Kasprzak; and
b) fatty alcohol ethoxylates, $R-(OCH_2CH_2)_a OH$ a=1 to 100, typically 12-40, R= hydrocarbon residue 8 to 20 C atoms, typically linear alkyl. Examples polyoxyethylene lauryl ether, with 4 or 23 oxyethylene groups; polyoxyethylene cetyl ether with 2, 10 or 20 oxyethylene groups; polyoxyethylene stearyl ether, with 2, 10, 20, 21 or 100 oxyethylene groups; polyoxyethylene (2), (10) oleyl ether, with 2 or 10 oxyethylene groups. Commercially available examples include, but are not limited to: ALFONIC, BRIJ, GENAPOL, NEODOL, SURFONIC, TRYCOL. See also US 6013683 Hill et al.,.

Suitable cationic surfactants include, but are not limited to dialkyldimethylammonium salts having the formula:

$$R'R''N^+(CH_3)_2X^-$$

Where each R'R" is independently selected from the group consisting of 12-30 C atoms or derived from tallow, coconut oil or soy, X=Cl or Br, Examples include: didodecyldimethylammonium bromide (DDAB), dihexadecyldimethyl ammonium chloride, dihexadecyldimethyl ammonium bromide, dioctadecyldimethyl ammonium chloride, dieicosyldimethyl ammonium chloride, didocosyldimethyl ammonium chloride, dicoconutdimethyl ammonium chloride, ditallowdimethyl ammonium bromide (DTAB). Commercially available examples include, but are not limited to: ADOGEN, ARQUAD, TOMAH, VARIQUAT. See also US 6013683 Hill et al.,

Suitable silicone surfactants include, but are not limited to the polyalkyleneoxide polysiloxanes having a dimethyl polysiloxane hydrophobic moiety and one or more hydrophilic polyalkylene side chains and have the general formula:

$$R^1-(CH_3)_2SiO-[(CH_3)_2SiO]_a-[(CH_3)(R^1)SiO]_b-Si(CH_3)_2-R^1$$

wherein a + b are from about 1 to about 50, preferably from about 3 to about 30 , more preferably from about 10 to about 25, and each $R^1$ is the same or different and is selected from the group consisting of methyl and a poly(ethyleneoxide/propyleneoxide) copolymer group having the general formula:

$$-(CH_2)_n O(C_2 H_4 O)_c (C_3 H_6 O)_d R^2$$

with at least one $R^1$ being a poly(ethyleneoxide/propyleneoxide) copolymer group, and wherein n is 3 or 4, preferably 3; total c (for all polyalkyleneoxy side groups) has a value of from 1 to about 100, preferably from about 6 to about 100; total d is from 0 to about 14, preferably from 0 to about 3; and more preferably d is 0; total c+d has a value of from about 5 to about 150, preferably from about 9 to about 100 and each $R^2$ is the same or different and is selected from the group

consisting of hydrogen, an alkyl having 1 to 4 carbon atoms, and an acetyl group, preferably hydrogen and methyl group. Examples of these surfactants may be found in US 5705562 Hill and US 5707613 Hill.

Examples of this type of surfactants are the Silwet® surfactants which are available CK Witco, OSi Division, Danbury, Connecticut. Representative Silwet surfactants are as follows.

| Name | Average MW | Average a+b | Average total c |
|---|---|---|---|
| L-7608 | 600 | 1 | 9 |
| L-7607 | 1,000 | 2 | 17 |
| L-77 | 600 | 1 | 9 |
| L-7605 | 6,000 | 20 | 99 |
| L-7604 | 4,000 | 21 | 53 |
| L-7600 | 4,000 | 11 | 68 |
| L-7657 | 5,000 | 20 | 76 |
| L-7602 | 3,000 | 20 | 29 |

The molecular weight of the polyalkyleneoxy group ($R^1$) is less than or equal to about 10,000. Preferably, the molecular weight of the polyalkyleneoxy group is less than or equal to about 8,000, and most preferably ranges from about 300 to about 5,000. Thus, the values of c and d can be those numbers which provide molecular weights within these ranges. However, the number of ethyleneoxy units ($-C_2H_4O$) in the polyether chain ($R^1$) must be sufficient to render the polyalkyleneoxide polysiloxane water dispersible or water soluble. If propyleneoxy groups are present in the polyalkylenoxy chain, they can be distributed randomly in the chain or exist as blocks. Preferred Silwet surfactants are L-7600, L-7602, L-7604, L-7605, L-7657, and mixtures thereof. Besides surface activity, polyalkyleneoxide polysiloxane surfactants can also provide other benefits, such as antistatic benefits, and softness to fabrics.

The preparation of polyalkyleneoxide polysiloxanes is well know in the art. Polyalkyleneoxide polysiloxanes of the present invention can be prepared according to the procedure set forth in U.S. Pat. No. 3,299,112.

Another suitable silicone surfactant is SF-1488, which is available from GE silicone fluids.

These and other surfactants suitable for use in combination with the lipophilic fluid as adjuncts are well known in the art, being described in more detail in Kirk Othmer's Encyclopedia of Chemical Technology, 3rd Ed., Vol. 22, pp. 360-379, "Surfactants and Detersive Systems". Further suitable nonionic detergent surfactants are generally disclosed in U.S. Patent 3,929,678, Laughlin et al., issued December 30, 1975, at column 13, line 14 through column 16, line 6.

The adjunct may also be an antistatic agent. Any suitable well-known antistatic agents used in laundering and dry cleaning art are suitable for use in the methods and compositions of the present invention. Especially suitable as antistatic agents are the subset of fabric softeners which are known to provide antistatic benefits. For example those fabric softeners which have a fatty acyl group which has an iodine value of above 20, such as N,N-di(tallowoyl-oxyethyl)-N,N-dimethyl ammonium methylsulfate. However, it is to be understood that the term antistatic agent is not to be limited to just this subset of fabric softeners and includes all antistatic agents.

Composition

The composition of the present invention is directed to attaining improved fabric cleaning in a lipophilic fluid treatment regimen, wherein the composition comprises a lipophilic fluid and a bleach system. The composition further comprises a polar component.

The polar component is a water-miscible material selected from the group consisting of water, alcohol, lower alcohols, glycols, glycol ethers, ethers, or mixtures thereof. The polar component is present in an amount of at least 0.01%, more preferably at least 0.05%, even more preferably at least 0.1 %, all by weight of fabric treating composition. Further the polar component is present in an amount of at most 25%, more preferably at most 5%, even more preferably at most 0.8%, all by weight of fabric treating composition.

The bleach system may include oxygen-based bleach, bleach activator and a peroxide source, pre-formed peracid, oxidative bleach enzyme, photo bleach, ozone, or mixtures of multiple bleach systems. If the bleach system comprises pre-formed peracid, the polar component preferably includes at least about 0.01% water by weight of composition. Preferably, the bleach system has at least about 1 ppm AvO, more preferably at least about 25 ppm AvO, even more preferably at least about 50 ppm AvO, even more preferably at least about 100 ppm AvO. Preferably, the bleach system has at most about 3000 ppm AvO, more preferably at most about 2000 ppm AvO. Most preferably, the bleach system has at least about 100 ppm AvO and at most about 500 ppm AvO. The bleach system may be within the polar component and/or within the lipophilic fluid as opposed to being a stand-alone system.

The lipophilic fluid may comprise a linear siloxane, a cyclic siloxane, or mixtures thereof Preferably, the lipophilic

fluid comprises a lipophilic fluid selected from the group consisting essentially of octamethylcyclotetrasiloxane, decamethylcyclopentasiloxane, dodecamethylcyclohexasiloxane, and mixtures thereof. More preferably, the lipophilic fluid comprises decamethyloyclopentasiloxane. Most preferably, the lipophilic fluid comprises decamethylcyolopentasiloxane and is substantially free of octamethylcyclotetrasiloxane.

While carrying out the present invention, the fabrics may also be exposed to an emulsifier an/or a surfactant either separately or as a result of being contained within the polar component, the lipophilic fluid, and/or the bleach system. The fabrics may also be exposed to adjunct ingredients selected from the group consisting essentially of enzymes, bleaches, surfactants, emulsifiers, fabric softeners, perfumes, antibacterial agents, antistatic agents, brighteners, dye fixatives, dye abrasion inhibitors, anti-crocking agents, wrinkle reduction agents, wrinkle resistance agents, soil release polymers, sunscreen agents, anti-fade agents, builders, chelants, sudsing agents, composition malodor control agents, composition coloring agents, pH buffers, waterproofing agents, soil repellency agents, oxidative bleach enzyme, and mixtures thereof. These adjuncts can also be applied either separately or as a result of being contained within the polar component, the lipophilic fluid, and/or the bleach system.

It will be understood that the compositions of the present invention may be combined with other fabric treatments. For example, prior to the application of the lipophilic fluid the fabric articles may be subjected to the particulate removal method described in co-pending application Serial No. 60/191,965, to Noyes et al., filed March 24,2000, the relevant parts of which are incorporated herein by reference.

The present invention may be used in a service, such as a dry cleaning service, diaper service, uniform cleaning service, or commercial business, such as a Laundromat, dry cleaner, linen service which is part of a hotel, restaurant, convention center, airport, cruise ship, port facility, casino, or may be used in the home.

The compositions of the present invention may be performed in an apparatus that is a modified existing apparatus and is retrofitted in such a manner as to conduct the process of the present invention in addition to related processes.

The compositions of the present invention may also be performed in an apparatus, which is not a modified existing apparatus but is one specifically built in such a manner so as to conduct the process of the present invention or may be added to another apparatus as part of a lipophilic fluid processing system. This would include all the associated plumbing, such as connection to a chemical and water supply, and sewerage for waste wash fluids.

A suitable apparatus may be capable of "dual mode" functions. A "dual mode" apparatus is one capable of both washing and drying fabrics within the same drum. These apparati are widely available, especially in Europe.

A suitable apparatus will typically contain some type of control system. These include electrical systems, such as, the so-called smart control systems, as well as more traditional electro-mechanical systems. The control systems would enable the user to select the size of the fabric load to be cleaned, the type of soiling, the extent of the soiling, the time for the cleaning cycle. Alternatively, the user could use pre-set cleaning and/or refreshing cycles, or the apparatus could control the length of the cycle, based on any number of ascertainable parameters. This would be especially true for electrical control systems. For example, when the collection rate of lipophilic fluid reaches a steady rate the apparatus could turn its self off after a fixed period of time, or initiate another process for the lipophilic fluid.

In the case of electrical control systems, one option is to make the control device a so-called "smart device". This could mean including, but not limited to, self diagnostic system, load type and cycle selection, linking the machine to the Internet and allowing for the consumer to start the apparatus remotely, be informed when the apparatus has cleaned a fabric article, or for the supplier to remotely diagnose problems if the apparatus should break down. Furthermore, if the apparatus is only a part of a cleaning system, the so called "smart system" could be communicating with the other cleaning devices which would be used to complete the remainder of the cleaning process, such as a washing machine, and a dryer.

## Claims

**1.** A composition for attaining improved fabric cleaning in a lipophilic fluid treatment regimen, said composition comprising:

a lipophilic fluid, wherein the lipophilic fluid is selected from the group consisting of linear and cyclic polysiloxanes, hydrocarbons of the glycol ether, or acetate ester
families;
a bleach system comprising a bleaching agent and an activator or catalyst; and
a polar component selected from the group consisting of water, lower alcohols, glycols, glycol ethers, and combinations thereof, said polar component comprising from at least 0.01 % to at most 25% by weight of the composition.

**2.** A composition according to claim 1 wherein the polar composition comprises from at least 0.05% to at most 5% by

weight of the composition.

3. A composition according to either of claims 1 or 2 wherein said bleach system is selected from the group consisting of oxygen-based bleach, bleach activator and a peroxide source, pre-formed peracid, photo bleach, ozone, oxidative bleach enzyme, and combinations thereof.

4. A composition according to any of claims 1 to 3 wherein said bleach system has from at least 1 ppm AvO to at most 3000 ppm AvO.

5. A composition according to claim 4 wherein said bleach system has from at least 100 ppm AvO to at most 500 ppm AvO.

6. A composition according to any of claims 1 to 5 wherein the lipophilic fluid is decamethylcyclopentasiloxane.

7. A composition according to any of claims 1 to 6 further comprising adjunct ingredients selected from the group consisting of enzymes, emulsifiers, surfactants, fabric softeners, perfumes, antibacterial agents, antistatic agents, brighteners, dye fixatives, dye abrasion inhibitors, wrinkle reduction agents, wrinkle resistance agents, soil release polymers, sunscreen agents, anti-fade agents, builders, chelants, sudsing agents, composition malodor control agents, composition coloring agents, pH buffers, waterproofing agents, soil repellency agents, oxidative bleach enzyme, and mixtures thereof.

**Patentansprüche**

1. Zusammensetzung zur Erzielung einer verbesserten Stoffreinigung in einem lipophilen Fluidbehandlungsregime, wobei die Zusammensetzung Folgendes umfasst:

   ein lipophiles Fluid, wobei das lipophile Fluid ausgewählt ist aus der Gruppe bestehend aus linearen und cyclischen Polysiloxanen, Kohlenwasserstoffen der Glykolether- oder Acetatesterfamilien;
   ein Bleichsystem, umfassend ein Bleichmittel und einen Aktivator oder Katalysator; und
   einen polaren Bestandteil, der ausgewählt ist aus der Gruppe bestehend aus Wasser, niederen Alkoholen, Glykolen, Glykolethern und Kombinationen davon, wobei der polare Bestandteil von mindestens 0,01 Gew.-% bis höchstens 25 Gew.-% der Zusammensetzung umfasst.

2. Zusammensetzung nach Anspruch 1, wobei die polare Zusammensetzung von mindestens 0,05 Gew.-% bis höchstens 5 Gew.-% der Zusammensetzung umfasst.

3. Zusammensetzung nach einem der Ansprüche 1 oder 2, wobei das Bleichsystem ausgewählt ist aus der Gruppe bestehend aus sauerstoffbasierter Bleiche, Bleichaktivator und einer Peroxidquelle, vorgeformter Persäure, Photobleichmittel, Ozon, oxidativem Bleichenzym und Kombinationen davon.

4. Zusammensetzung nach einem der Ansprüche 1 bis 3, wobei das Bleichsystem von mindestens 1 ppm AvO bis höchstens 3000 ppm AvO aufweist.

5. Zusammensetzung nach Anspruch 4, wobei das Bleichsystem von mindestens 100 ppm AvO bis höchstens 500 ppm AvO aufweist.

6. Zusammensetzung nach einem der Ansprüche 1 bis 5, wobei das lipophile Fluid Decamethylcyclopentasiloxan ist.

7. Zusammensetzung nach einem der Ansprüche 1 bis 6, ferner umfassend Zusatzbestandteile, die ausgewählt sind aus der Gruppe bestehend aus Enzymen, Emulgatoren, Tensiden, Gewebeweichmachern, Duftstoffen, antibakteriellen Mitteln, Antistatika, Aufhellern, Farbstofffixierungsmitteln, Farbstoffabschürfungsinhibitoren, Knitterverringerungsmitteln, Knitterschutzmitteln, Schmutzabweisungspolymeren, Sonnenschutzmitteln, Antiverblassungsmitteln, Buildern, Chelanten, Schäumungsmitteln, Geruchsbekämpfungsmitteln der Zusammensetzung, Zusammensetzungsfarbstoffe, pH-Puffern, Imprägniermitteln, Schmutzabweisungsmitteln, oxidativem Bleichenzym und Mischungen davon.

**Revendications**

1. Composition permettant d'obtenir un nettoyage amélioré des tissus dans un régime de traitement à fluide lipophile, ladite composition comprenant :

   un fluide lipophile, dans laquelle le fluide lipophile est choisi dans le groupe constitué des familles polysiloxanes linéaires et cycliques, hydrocarbures de l'éther de glycol ou ester d'acétate ;
   un système de blanchiment comprenant un agent de blanchiment et un activateur ou catalyseur ; et
   un composant polaire choisi dans le groupe constitué de l'eau, des alcools inférieurs, des glycols, des éthers de glycol, et leurs combinaisons, ledit composant polaire constituant d'au moins 0,01 % à au plus 25 % en poids de la composition.

2. Composition selon la revendication 1, dans laquelle la composition polaire constitue d'au moins 0,05 % à au plus 5 % en poids de la composition.

3. Composition selon la revendication 1 ou la revendication 2, dans laquelle ledit système de blanchiment est choisi dans le groupe constitué d'agent de blanchiment à base d'oxygène, activateur de blanchiment et une source de peroxyde, peracide préformé, agent de photoblanchiment, ozone, enzyme de blanchiment oxydante, et leurs combinaisons.

4. Composition selon l'une quelconque des revendications 1 à 3, dans laquelle ledit système de blanchiment a d'au moins 1 ppm d'AvO jusqu'à au plus 3000 ppm d'AvO.

5. Composition selon la revendication 4, dans laquelle ledit système de blanchiment a d'au moins 100 ppm d'AvO jusqu'à au plus 500 ppm d'AvO.

6. Composition selon l'une quelconque des revendications 1 à 5, dans laquelle le fluide lipophile est le décaméthylcyclopentasiloxane.

7. Composition selon l'une quelconque des revendications 1 à 6, comprenant en outre des ingrédients additifs choisis dans le groupe constitué d'enzymes, émulsifiants, agents tensioactifs, adoucissants des tissus, parfums, agents antibactériens, agents antistatiques, azurants, fixateurs de colorants, inhibiteurs d'abrasion de teinture, agents de réduction des plis, agents de résistance aux plis, polymères de libération des salissures, agents d'écran solaire, agents anti-décoloration, adjuvants, agents chélatants, agents de moussage, agents de contrôle de mauvaise odeur de composition, agents colorants de composition, tampons de pH, agents d'imperméabilisation, agents de répulsion des salissures, enzymes de blanchiment oxydantes, et leurs mélanges.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 60209250 B
- US 60209468 B
- US 601209443 B
- US 60209444 B
- US 60248023 B
- US 3635667 A
- US 3576747 A
- JP 08295897 A
- DE 2157061 A
- US 6063135 A
- EP 530919 A
- US 5865852 A
- US 5942007 A
- US 6042617 A
- US 6042618 A
- US 6056789 A
- US 6059845 A
- US 5523434 A
- US 5698504 A, Christie
- US 5695679 A, Christie
- US 5686401 A, Willey
- US 5686014 A, Hartshorn
- US 5405412 A, Willey
- US 5405413 A, Willey
- US 5130045 A, Mitchel
- US 4412934 A, Chung
- US 08709072 B
- US 08064564 B
- US 5686015 A, Willey
- US 5654421 A, Taylor
- US 5460747 A, Gosselink
- US 5584888 A, Miracle
- US 5578136 A, Taylor
- US 4966723 A, Hodge
- WO 9428102 A
- US 5503639 A, Willey
- US 4430243 A, Bragg
- US 5576282 A
- US 5246621 A
- US 5244594 A
- US 5194416 A
- US 5114606 A
- EP 549271 A1
- EP 549272 A1
- EP 544440 A2
- EP 544490 A1
- US 5114611 A
- US 4728455 A
- US 5284944 A
- US 5246612 A
- US 5256779 A
- US 5280117 A
- US 5274147 A
- US 5153161 A
- US 5227084 A
- US 5597936 A
- US 5595967 A
- US 5703030 A
- US 4810410 A
- US 5360569 A
- US 5442066 A
- US 5478357 A
- US 5370826 A
- US 5482515 A
- US 5550256 A
- WO 9513351 A
- WO 9513352 A
- WO 9513353 A
- US 5487818 A
- US 5310934 A
- US 5246620 A
- US 5279757 A
- US 5132431 A
- US 4217105 A
- US 5916481 A
- EP 91202655 A
- US 5346588 A
- US 4685930 A, Kasprzak
- US 6013683 A, Hill
- US 5705562 A, Hill
- US 5707613 A, Hill
- US 3299112 A
- US 3929678 A, Laughlin
- US 60191965 B, Noyes


### Non-patent literature cited in the description


- **Houben Weyl.** *Organischen Chemie,* 1953, vol. 2, 562

- Bleaching Agents (Survey). Kirk Othmer's Encyclopedia of Chemical Technology. John Wiley & Sons, 1992, vol. 4, 271-300
- **Kirk Othmer.** Encyclopedia of Chemical Technology. John Wiley and Sons, 1982, vol. 17, 27-90
- **M. L. Tobe.** Base Hydrolysis of Transition-Metal Complexes. *Adv. Inorg. Bioinorg. Mech.,* 1983, vol. 2, 1-94
- *J. Chem. Ed.,* 1989, vol. 66 (12), 1043-45
- **W.L. Jolly.** The Synthesis and Characterization of Inorganic Compounds. Prentice-Hall, 1970, 461-3
- *Inorg. Chem.,* 1979, vol. 18, 1497-1502
- *Inorg. Chem.,* 1982, vol. 21, 2881-2885
- *Inorg. Chem.,* 1979, vol. 18, 2023-2025
- *Inorg. Synthesis,* 1960, 173-176
- *Journal of Physical Chemistry,* 1952, vol. 56, 22-25
- Surfactants and Detersive Systems. Kirk Othmer's Encyclopedia of Chemical Technology. vol. 22, 360-379